# EUROPEAN PATENT APPLICATION

(11) **EP 4 494 909 A1**
(43) Date of publication of application: **22.01.2025**
(21) Application number: 23846175.0
(22) Date of filing: 06.07.2023
(51) Int. Cl.: B60K 11/06, B60H 1/22, B60H 1/32, B60L 50/60, B60L 58/26, F25B 1/00, F25B 39/02, F25B 41/40, F28D 7/10, F28D 7/16, F28D 9/00, F28F 9/00, F28F 21/08, H01M 10/613, H01M 10/625, H01M 10/6556, H01M 10/6568, H01M 10/663, H01M 10/667

(54) **MANIFOLD**

(30) Priority: 26.07.2022 JP 2022118637; 26.09.2022 JP 2022152778; 30.09.2022 JP 2022158472; 30.11.2022 JP 2022191921
(71) Applicant: AISIN CORPORATION, Kariya-shi, Aichi 448-8650 (JP)
(72) Inventor: OTSUKA Kosuke, Kariya-shi, Aichi 448-8650 (JP); YOSHIDA Satoshi, Kariya-shi, Aichi 448-8650 (JP); KAMIYA Takeshi, Kariya-shi, Aichi 448-8650 (JP)
(74) Representative: Kramer Barske Schmidtchen Patentanwälte PartG mbB
(86) International application number: PCT/JP2023/025133
(87) International publication number: WO 2024/024443

(57) **Abstract**

A manifold includes a channel housing including a first channel that allows a first cooling fluid to flow, and a second channel that allows a second cooling fluid to flow, in which, in the channel housing, heat is exchanged between the first cooling fluid that flows through the first channel and the second cooling fluid that flows through the second channel.

## Description

### TECHNICAL FIELD

The present invention relates to a manifold.

### BACKGROUND ART

In recent years, an automobile (hybrid electric vehicle (HEV), plug-in hybrid electric vehicle (PHEV), battery electric vehicle (BEV), fuel-cell electric vehicle (FCEV), or the like) including a motor as a traveling drive source has been widely used. These automobiles (hereinafter, collectively referred to as an "electric vehicle") include a battery for driving motors. In the electric vehicle, there are many devices that require cooling, such as the motors (including an internal combustion engine such as an engine), a battery, an air conditioner, and an ECU. Therefore, a cooling circuit that circulates cooling water or a refrigerant is included to cool these devices. However, these devices may have different appropriate operating temperatures. In such a case, in order to change temperature of the cooling water or refrigerant to be circulated for each device having a different operating temperature, heat is exchanged through a heat exchanger, such as a chiller or a water-cooled condenser, to control the temperature of the cooling water or the refrigerant.

A heat exchange system disclosed in Patent Literature 1 includes a heat pump cycle, a high-temperature water circuit, and a low-temperature water circuit. Then, heat is exchanged between the heat pump cycle and the high-temperature water circuit by the water-cooled condenser, and heat is exchanged between the heat pump cycle and the low-temperature water circuit by the chiller and an internal heat exchanger.

Furthermore, a heat exchange system disclosed in Patent Literature 2 includes a heat pump cycle. The heat pump cycle includes auxiliary units such as a compressor (compressor in Patent Literature 2), an interior radiator, an electric expansion valve, a first heat exchanger, an electromagnetic valve, an evaporator (evaporator in Patent Literature 2), and an accumulator. The heat pump cycle is a heat cycle for heating or cooling the vehicle interior.

Moreover, Patent Literature 3 describes an air conditioning device for vehicle that cools a battery that supplies electric power to an electric motor for vehicle traveling. A refrigerant circuit in the air conditioning device for vehicle includes a heat absorber, a radiator, a compressor, an expansion valve, an exterior heat exchanger, and an internal heat exchanger, which are connected to each other by piping. Furthermore, the internal heat exchanger is configured to exchange heat between the refrigerant flowing into the heat absorber and the refrigerant flowing out from the heat absorber.

### CITATIONS LIST

### PATENT LITERATURE

Patent Literature 1: JP 2020-192965 A
Patent Literature 2: JP 2013-139251 A
Patent Literature 3: JP 2020-11615 A

### SUMMARY OF INVENTION

### TECHNICAL PROBLEMS

In the heat exchange system disclosed in Patent Literature 1, heat is exchanged only at the water-cooled condenser, the chiller, and the internal heat exchanger (hereinafter, collectively referred to as a "heat exchanger"), and thus it is necessary to use a large-size heat exchanger in order to improve heat exchange performance (efficiency). Therefore, a limited space in an engine compartment of a vehicle is occupied. Furthermore, if the size of the heat exchanger is reduced, desired cooling performance may not be obtained.

Furthermore, in the heat exchange system disclosed in Patent Literature 2, the auxiliary units, such as the compressor, the interior radiator, the electric expansion valve, the first heat exchanger, the electromagnetic valve, the evaporator, and the accumulator, are disposed as independent devices. These auxiliary units are usually fixed to a vehicle body by bolts or the like. Therefore, because the heat exchange system occupies a limited space in the engine compartment of a vehicle, there is room for improvement.

Moreover, if mounted on a vehicle, the heat exchange system is desired to be downsized from the viewpoint of routing piping and weight reduction. In the air conditioning device for vehicle described in Patent Literature 3, the respective units of the refrigerant circuit are connected to each other by piping as described above, and therefore, it is necessary to provide portions for connecting pipes, and thus the refrigerant circuit is large. Furthermore, the air conditioning device for vehicle includes the internal heat exchanger, and thus is large. Therefore, there is room for improvement in downsizing.

Therefore, a manifold with which a downsized heat exchange system can be used is required.

### SOLUTIONS TO PROBLEMS

A characteristic configuration of a manifold according to the present invention is that the manifold includes a channel housing including a first channel that allows a first cooling fluid to flow, and a second channel that allows a second cooling fluid to flow, in which, in the channel housing, heat is exchanged between the first cooling fluid that flows through the first channel and the second cooling fluid that flows through the second channel.

With such a characteristic configuration, by exchanging heat between the first cooling fluid that flows through the first channel provided in the channel housing of the manifold and the second cooling fluid that flows through the second channel provided in the channel housing of the manifold, it is possible to obtain sufficient cooling performance even if a small heat exchanger is used. Furthermore, because heat can be exchanged in the channel housing, the manifold can be downsized as compared with a case where the heat exchanger is externally attached to the channel housing. Moreover, cooling of the first cooling fluid flowing through the first channel and heating of the second cooling fluid flowing through the second channel can be performed in the channel housing. By performing heat exchange between the fluids in the channel housing, it is possible to improve a coefficient of performance of, for example, a compressor and an expansion valve. Therefore, because heat can be exchanged by a small internal heat exchanger that cools and heats the fluid or without providing another such internal heat exchanger, the manifold can be downsized.

### BRIEF DESCRIPTION OF DRAWINGS

FIG. 1 is a circuit configuration diagram of a cooling system having a manifold according to a first embodiment.
FIG. 2 is a schematic configuration diagram of the manifold.
FIG. 3 is a diagram showing a relationship between a first internal refrigerant channel and eighth internal channel and other channels according to the first embodiment.
FIG. 4 is a diagram showing a channel configuration of a manifold according to a second embodiment.
FIG. 5 is a diagram showing the channel configuration of the manifold according to a modification of the second embodiment.
FIG. 6 is a diagram showing the channel configuration of the manifold according to another modification of the second embodiment.
FIG. 7 is a cross-sectional view showing a method for fixing a chiller to a channel housing according to a third embodiment.
FIG. 8 is a schematic configuration diagram of a manifold according to a fourth embodiment.
FIG. 9 is a cross-sectional view showing a configuration of a chiller in a channel housing according to the fourth embodiment.
FIG. 10 is a circuit configuration diagram of a cooling system having a manifold according to a fifth embodiment.
FIG. 11 is a schematic configuration diagram of the manifold according to the fifth embodiment.
FIG. 12 is a diagram showing a relationship between a second refrigerant channel and fourth refrigerant channel and other channels according to the fifth embodiment.
FIG. 13 is a Mollier diagram showing a heat cycle.
FIG. 14 is a diagram showing a high-temperature channel and a low-temperature channel according to another embodiment.
FIG. 15 is a diagram showing the high-temperature channel and the low-temperature channel according to another embodiment.
FIG. 16 is a diagram showing the high-temperature channel and the low-temperature channel according to another embodiment.

### DESCRIPTION OF EMBODIMENTS

Hereinafter, an embodiment of a manifold according to the present invention will be described in detail with reference to the drawings. Note that the embodiments described below are examples for describing the present invention, and the present invention is not limited only to these embodiments. Therefore, the present invention can be implemented in various forms without departing from the gist thereof.

### [First embodiment]

### [Configuration of cooling system]

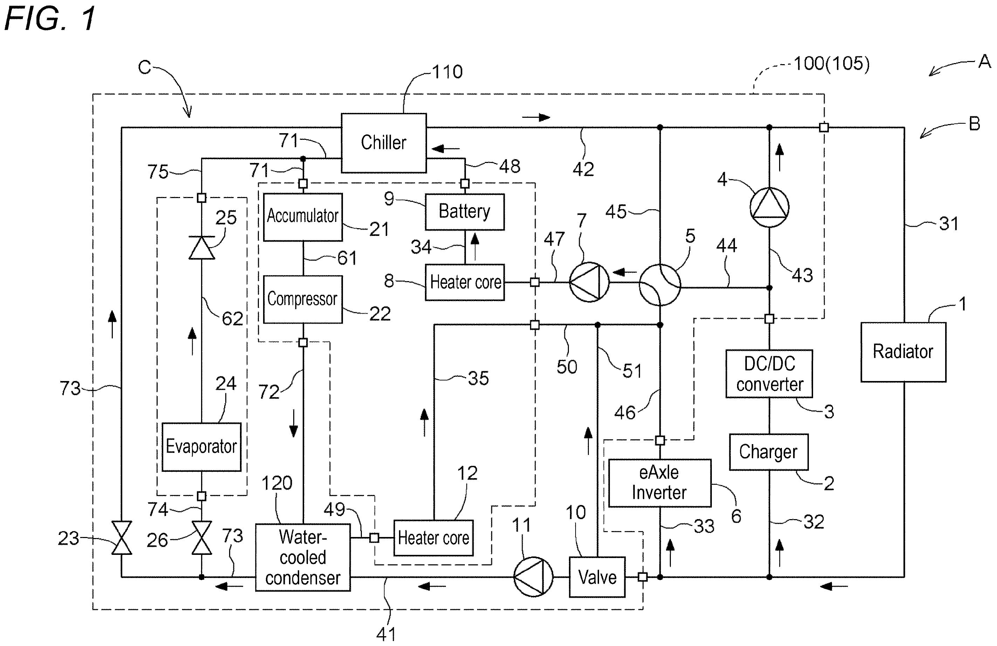

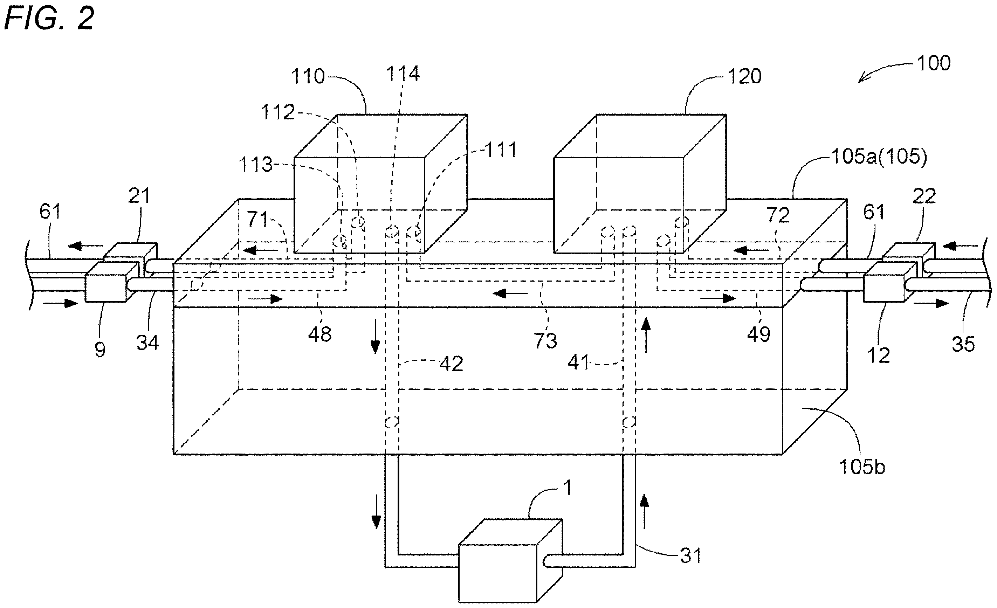

As shown in FIG. 1, a cooling system A including a manifold 100 according to the present embodiment includes roughly a cooling water circuit B and a refrigerant circuit C. Cooling water (an example of a second cooling fluid and a coolant), such as an antifreeze liquid containing ethylene glycol or the like as a main component, and a long-life coolant, flows in the cooling water circuit B, and a refrigerant (an example of a first cooling fluid), such as a hydrofluorocarbon (HFC), flows in the refrigerant circuit C. In FIG. 1, a portion surrounded by a broken line is the manifold 100 according to the present embodiment. The manifold 100 includes a channel housing 105 and auxiliary units including a chiller 110 (an example of an evaporator), a water-cooled condenser 120 (an example of a condenser), a first electric pump 4, a rotary valve 5 including a four-way valve, a second electric pump 7, a switching valve 10 including a three-way valve, a third electric pump 11, a first expansion valve 23, and a second expansion valve 26. In FIG. 1, the auxiliary units are depicted as being inside the channel housing 105, but are actually mounted on an outer surface of the channel housing 105 as shown in FIG. 2. FIG. 2 shows a schematic configuration diagram of the manifold 100. In FIG. 2, however, illustration of the auxiliary units (for example, a pump or a valve) other than the chiller 110 and the water-cooled condenser 120 is omitted. In the present embodiment, the channel housing 105 is formed of a metal material containing aluminum and having high thermal conductivity, and channels that constitute the cooling water circuit B and the refrigerant circuit C are formed by directly making holes in the channel housing 105. Note that, in the present embodiment, as an example of the coolant, an antifreeze liquid containing ethylene glycol or the like as a main component, or cooling water such as a long-life coolant is used. However, the coolant may be a coolant including insulating oil such as paraffin. Furthermore, the refrigerant may be a refrigerant such as hydrofluoroolefin (HFO). These are similar in all the embodiments described below.

First, the cooling water circuit B will be described. The cooling water circuit B includes channels on a right side of the chiller 110 and the water-cooled condenser 120 in FIG. 1. The cooling water circuit B has a first external channel 31 outside the channel housing 105. The first external channel 31 is connected to a first internal channel 41 (an example of a second channel and a cooling channel) and a second internal channel 42 (an example of the second channel and the cooling channel) formed inside the channel housing 105. A radiator 1 is disposed in the middle of the first external channel 31. The cooling water flows through the second internal channel 42, the first external channel 31, the radiator 1, the first external channel 31, and the first internal channel 41 in this order. Hereinafter, an upstream side and downstream side with respect to a direction in which the cooling water flows in the cooling water circuit B are also simply referred to as the upstream side and the downstream side.

A second external channel 32 and a third external channel 33 are branched from the first external channel 31 on the downstream side of the radiator 1 and the upstream side of the first internal channel 41 in the first external channel 31. The second external channel 32 is connected to a third internal channel 43 formed inside the channel housing 105, on the downstream side. The third internal channel 43 is connected on the downstream side to the second internal channel 42. The cooling water branched from the first external channel 31 to the second external channel 32 flows through the second external channel 32, cools a charger 2 and a DC-DC converter 3, and flows into the third internal channel 43. The cooling water is pressurized by the first electric pump 4 in the third internal channel 43, and then flows into the second internal channel 42.

A fourth internal channel 44 branches from the third internal channel 43, on the upstream side of the first electric pump 4 in the third internal channel 43. In a state shown in FIG. 1, the fourth internal channel 44 is connected to a fifth internal channel 45 via the rotary valve 5. A downstream side of the fifth internal channel 45 is connected to the second internal channel 42.

The third external channel 33 is connected on the downstream side to a sixth internal channel 46 formed inside the channel housing 105. The sixth internal channel 46 is connected to a seventh internal channel 47 via the rotary valve 5. The second electric pump 7 is disposed in the middle of the seventh internal channel 47. The cooling water branched from the first external channel 31 to the third external channel 33 flows through the third external channel 33, cools an eAxle Inverter 6, and flows into the sixth internal channel 46. In the state shown in FIG. 1, the cooling water is pressurized by the second electric pump 7 in the seventh internal channel 47 via the rotary valve 5, and then flows out of the channel housing 105. The eAxle inverter 6 is a unit in which a rotating electrical machine, a speed reducer, and a differential gear mechanism are housed in a housing, and the inverter is provided integrally with the unit. Note that, by rotating the rotary valve 5, the fourth internal channel 44 and the sixth internal channel 46 can be connected, and the fifth internal channel 45 and the seventh internal channel 47 can be connected.

The seventh internal channel 47 is connected to a fourth external channel 34 outside the channel housing 105. The fourth external channel 34 is connected on the downstream side to an eighth internal channel 48 (an example of the second channel and the cooling channel) formed inside the channel housing 105. The cooling water flowing out from the seventh internal channel 47 flows through the fourth external channel 34, is cooled by a first heater core 8, then is warmed by cooling a battery 9, and flows into the eighth internal channel 48. The eighth internal channel 48 is connected on the downstream side to the chiller 110. A downstream side of the chiller 110 is connected to the second internal channel 42. The cooling water flowing through the eighth internal channel 48 flows into the chiller 110, is cooled by being deprived of heat by atomized refrigerant flowing from a third internal refrigerant channel 73 (an example of the first channel and the refrigerant channel), which will be described later, in the chiller 110, and then flows through the second internal channel 42. The cooling water flowing through the second internal channel 42 flows into the first external channel 31 connected to outside of the channel housing 105.

The first internal channel 41 connected to the first external channel 31 is connected on the downstream side to the water-cooled condenser 120. Furthermore, the switching valve 10 and the third electric pump 11 are disposed in this order in the middle of the first internal channel 41. A downstream side of the water-cooled condenser 120 is connected to a ninth internal channel 49 (an example of the second channel and the cooling channel). The cooling water flowing into the first internal channel 41 is pressurized by the third electric pump 11, flows into the water-cooled condenser 120, and is heated by taking heat from the refrigerant in a state of high-temperature compressed gas that has flowed from a second internal refrigerant channel 72 (an example of the first channel and the refrigerant channel), which will be described later, in the water-cooled condenser 120. Then, the cooling water flows through the ninth internal channel 49 and flows out of the channel housing 105.

The ninth internal channel 49 is connected to a fifth external channel 35 outside the channel housing 105. The fifth external channel 35 is connected on the downstream side to a tenth internal channel 50 formed inside the channel housing 105. The tenth internal channel 50 is connected on the downstream side to the sixth internal channel 46. The cooling water flowing out from the ninth internal channel 49 flows through the fifth external channel 35, is cooled by a second heater core 12, and flows into the tenth internal channel 50. The cooling water flowing through the tenth internal channel 50 flows into the sixth internal channel 46.

The switching valve 10 disposed in the first internal channel 41 switches a direction in which the cooling water flows, between the first internal channel 41 and an eleventh internal channel 51 formed inside the channel housing 105. The eleventh internal channel 51 is connected on the downstream side to the tenth internal channel 50. When the switching valve 10 is switched such that the cooling water flows through the eleventh internal channel 51, the cooling water flows from the first internal channel 41 through the eleventh internal channel 51 into the tenth internal channel 50, and then flows into the sixth internal channel 46.

Next, the refrigerant circuit C will be described. The refrigerant circuit C includes channels on a left side of the chiller 110 and the water-cooled condenser 120 in FIG. 1. The refrigerant circuit C is formed inside the channel housing 105, and the refrigerant flows therethrough. A first internal refrigerant channel 71 (an example of the first channel and the refrigerant channel) is provided on a downstream side of a direction in which the refrigerant flows with respect to the chiller 110 (hereinafter, an upstream side and downstream side with respect to the direction in which the refrigerant flows in the refrigerant circuit C are also simply referred to as the upstream side and the downstream side). The first internal refrigerant channel 71 is connected to a first external refrigerant channel 61 formed outside the channel housing 105. An accumulator 21 and a compressor 22 are disposed in this order in the middle of the first external refrigerant channel 61. The first external refrigerant channel 61 is connected on the downstream side to a second internal refrigerant channel 72 formed inside the channel housing 105. The second internal refrigerant channel 72 is connected on the downstream side to the water-cooled condenser 120. The downstream side of the water-cooled condenser 120 is connected to the third internal refrigerant channel 73 formed inside the channel housing 105. The third internal refrigerant channel 73 is connected to the chiller 110 via the first expansion valve 23 disposed in the middle of the third internal refrigerant channel 73. That is, in the channel housing 105, on the third internal refrigerant channel 73, the water-cooled condenser 120 is mounted at a position on the upstream side with respect to the direction in which the refrigerant flows, and the chiller 110 is mounted at a position on the downstream side with respect to the direction in which the refrigerant flows.

A fourth internal refrigerant channel 74 is branched from the third internal refrigerant channel 73, on the upstream side of the first expansion valve 23 in the third internal refrigerant channel 73. The second expansion valve 26 is disposed in the middle of the fourth internal refrigerant channel 74. The fourth internal refrigerant channel 74 is connected to a second external refrigerant channel 62 formed outside the channel housing 105. An evaporator 24 and a check valve 25 are disposed in this order in the middle of the second external refrigerant channel 62. The second external refrigerant channel 62 is connected to a fifth internal refrigerant channel 75 formed inside the channel housing 105. The fifth internal refrigerant channel 75 is connected on the downstream side to the first internal refrigerant channel 71.

Next, a flow of the refrigerant in the refrigerant circuit C will be described. The refrigerant that has flowed through the first external refrigerant channel 61 and turned into high-temperature compressed gas in the compressor 22 flows through the first external refrigerant channel 61 and flows into the water-cooled condenser 120 from the second internal refrigerant channel 72. The refrigerant is condensed and liquefied by being deprived of heat by the cooling water flowing in from the first internal channel 41 in the water-cooled condenser 120. Of the liquefied refrigerant, some that is used for cooling an inside of the vehicle exits the water-cooled condenser 120, flows through the fourth internal refrigerant channel 74 from the third internal refrigerant channel 73, is expanded by the second expansion valve 26 to turn into low-temperature and low-pressure mist, then flows out from the channel housing 105, flows through the second external refrigerant channel 62, and is sent to the evaporator 24. The atomized refrigerant draws heat from air introduced from outside by the evaporator 24 and evaporates. Conversely, the air is cooled by being deprived of heat by the refrigerant, and is sent as cold air into the vehicle. The evaporated and vaporized refrigerant flows into the fifth internal refrigerant channel 75 through the check valve 25 disposed in the second external refrigerant channel 62, and flows out of the channel housing 105 from the first internal refrigerant channel 71. Then, the vaporized refrigerant flows through the first external refrigerant channel 61 and is sent to the accumulator 21. In a case where liquid is contained in the vaporized refrigerant, the accumulator 21 separates the liquid from the vaporized refrigerant. Thereafter, the vaporized refrigerant flows through the first external refrigerant channel 61, returns to the compressor 22, and is compressed again to turn into a high-temperature compressed gas.

Of the refrigerant liquefied in the water-cooled condenser 120, some that is not used for cooling the inside of the vehicle exits the water-cooled condenser 120, flows through the third internal refrigerant channel 73, is expanded by the first expansion valve 23 to turn into a low-temperature and low-pressure mist, and then is sent to the chiller 110. In the chiller 110, the atomized refrigerant draws heat from the cooling water flowing in from the eighth internal channel 48 and evaporates. The evaporated and vaporized refrigerant flows out of the channel housing 105 from the first internal refrigerant channel 71. Then, the vaporized refrigerant flows through the first external refrigerant channel 61 and is sent to the accumulator 21. Because the check valve 25 is provided on the second external refrigerant channel 62, the refrigerant does not flow into the evaporator 24. In a case where the vaporized refrigerant contains liquid, the accumulator 21 separates the liquid refrigerant. Thereafter, the vaporized refrigerant flows through the first external refrigerant channel 61, returns to the compressor 22, and is compressed again to turn into a high-temperature compressed gas.

Usually, heat is exchanged between the cooling water and the refrigerant only by the chiller 110 and the water-cooled condenser 120 that are heat exchangers. However, in the present embodiment, the heat is exchanged not only in the chiller 110 and the water-cooled condenser 120 but also between channels by bringing the channels of the cooling water circuit B and the channels of the refrigerant circuit C close to each other.

For specific disposition of the channels connected to the chiller 110, as shown in FIG. 2, in the channel housing 105, the eighth internal channel 48 of the cooling water circuit B flowing into the chiller 110 and the first internal refrigerant channel 71 of the refrigerant circuit C flowing out from the chiller 110 are disposed close to and in parallel with each other, and the second internal channel 42 of the cooling water circuit B flowing out from the chiller 110 and the third internal refrigerant channel 73 of the refrigerant circuit C flowing into the chiller 110 are disposed close to and in parallel with each other. At this time, the direction in which the cooling water flows through the eighth internal channel 48 and the direction in which the refrigerant flows through the first internal refrigerant channel 71 are opposite to each other, and the direction in which the cooling water flows through the second internal channel 42 and the direction in which the refrigerant flows through the third internal refrigerant channel 73 are opposite to each other. Furthermore, in the channel housing 105, the eighth internal channel 48 and the first internal refrigerant channel 71 exchange heat at a point formed in an L shape, and the second internal channel 42 and the third internal refrigerant channel 73 exchange heat at a point formed in a linear shape. With this configuration, heat is exchanged not only in the chiller 110 but also between the cooling water flowing through the eighth internal channel 48 and the refrigerant flowing through the first internal refrigerant channel 71, and heat is also exchanged between the cooling water flowing through the second internal channel 42 and the refrigerant flowing through the third internal refrigerant channel 73. As described above, because heat is also exchanged between the internal channels outside the chiller 110 and the internal refrigerant channels, it is possible to obtain necessary and sufficient cooling performance even if a small chiller is used as the chiller 110.

Furthermore, for specific disposition of the channels connected to the water-cooled condenser 120, as shown in FIG. 2, in the channel housing 105, the first internal channel 41 of the cooling water circuit B flowing into the water-cooled condenser 120 and the third internal refrigerant channel 73 of the refrigerant circuit C flowing out from the water-cooled condenser 120 are disposed close to and in parallel with each other, and the ninth internal channel 49 of the cooling water circuit B flowing out from the water-cooled condenser 120 and the second internal refrigerant channel 72 of the refrigerant circuit C flowing into the water-cooled condenser 120 are disposed close to and in parallel with each other. At this time, the direction in which the cooling water flows through the first internal channel 41 and the direction in which the refrigerant flows through the third internal refrigerant channel 73 are opposite to each other, and the direction in which the cooling water flows through the ninth internal channel 49 and the direction in which the refrigerant flows through the second internal refrigerant channel 72 are opposite to each other. Furthermore, in the channel housing 105, the first internal channel 41 and the third internal refrigerant channel 73 exchange heat at a point formed in a linear shape, and the ninth internal channel 49 and the second internal refrigerant channel 72 exchange heat at a point formed in an L shape. With this configuration, heat is exchanged not only in the water-cooled condenser 120 but also between the cooling water flowing through the first internal channel 41 and the refrigerant flowing through the third internal refrigerant channel 73, and heat is also exchanged between the cooling water flowing through the ninth internal channel 49 and the refrigerant flowing through the second internal refrigerant channel 72. As described above, because heat is also exchanged between the internal channels outside the water-cooled condenser 120 and the internal refrigerant channels, it is possible to obtain necessary and sufficient cooling performance even if a small water-cooled condenser is used as the water-cooled condenser 120.

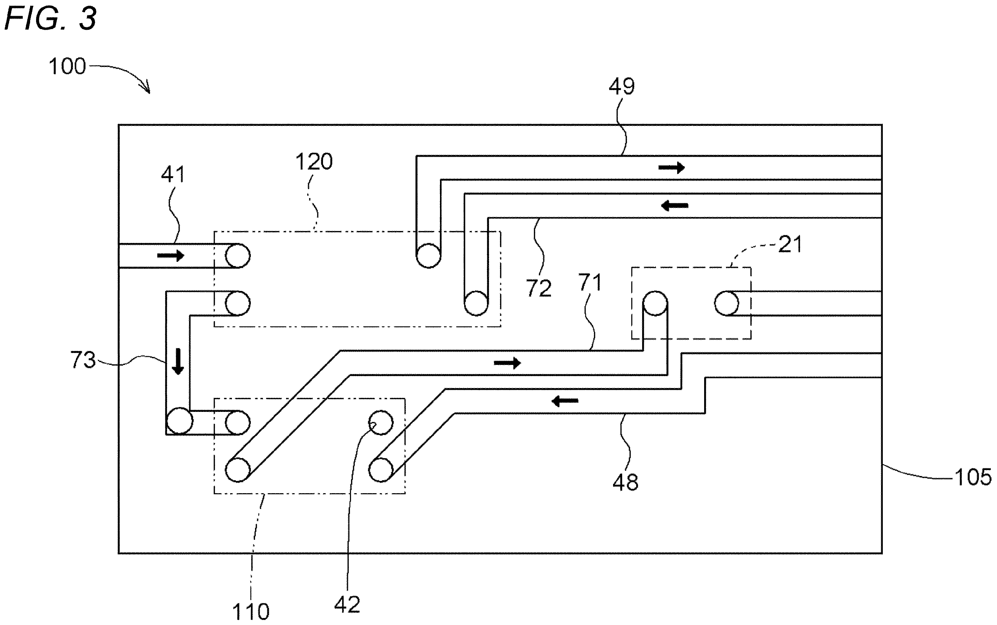

FIG. 3 is a diagram showing a relationship between the first internal refrigerant channel 71 and eighth internal channel 48 and other channels according to the present embodiment. As shown in FIG. 3, the first internal refrigerant channel 71 through which the refrigerant flowing out from the chiller 110 flows and the eighth internal channel 48 through which the cooling water flowing into the chiller 110 flows are provided at intervals shorter than intervals between the other channels provided in the channel housing 105. The first internal refrigerant channel 71 is a refrigerant channel through which the refrigerant flows from the chiller 110 to the accumulator 21. The eighth internal channel 48 is a cooling channel through which the cooling water flows from the battery 9 to the chiller 110. The other channels provided in the channel housing 105 correspond to the first internal channel 41 through which the cooling water flowing into the water-cooled condenser 120 flows, the ninth internal channel 49 through which the cooling water flowing out from the water-cooled condenser 120 flows, the third internal refrigerant channel 73 through which the refrigerant flowing out from the water-cooled condenser 120 flows, and the second internal refrigerant channel 72 through which the refrigerant flowing into the water-cooled condenser 120 flows. Therefore, the first internal refrigerant channel 71 and the eighth internal channel 48 are provided at an interval shorter than an interval between the first internal channel 41 and the third internal refrigerant channel 73, and an interval between the ninth internal channel 49 and the second internal refrigerant channel 72. That is, the eighth internal channel 48 is configured closer to the first internal refrigerant channel 71 than to the first internal channel 41, the second internal channel 42, and the ninth internal channel 49.

Furthermore, in a vicinity of the water-cooled condenser 120, the ninth internal channel 49 is preferably configured closer to the second internal refrigerant channel 72 than to the first internal channel 41, the second internal channel 42, and the eighth internal channel 48, and the first internal channel 41 is preferably configured closer to the third internal refrigerant channel 73 than to the second internal channel 42, the eighth internal channel 48, and the ninth internal channel 49. Moreover, in a vicinity of the chiller 110, the second internal channel 42 is preferably configured closer to the third internal refrigerant channel 73 than to the first internal channel 41, the eighth internal channel 48, and the ninth internal channel 49.

### [Second embodiment]

Next, a manifold 100 according to a second embodiment will be described. In the present embodiment, shapes of an eighth internal channel 48 and a first internal refrigerant channel 71, a second internal channel 42 and a third internal refrigerant channel 73, a first internal channel 41 and the third internal refrigerant channel 73, and a ninth internal channel 49 and a second internal refrigerant channel 72, which are disposed close to and in parallel with each other in a channel housing 105, are different from those in the first embodiment. Because other configurations are similar to those in the first embodiment, detailed description of the similar configurations is omitted. Hereinafter, each of the eighth internal channel 48, a portion of the second internal channel 42, the portion being disposed close to and in parallel with the third internal refrigerant channel 73, a portion of the first internal channel 41, the portion being disposed close to and in parallel with the third internal refrigerant channel 73, and the ninth internal channel 49 is collectively referred to as a parallel internal channel 81. Furthermore, each of the first internal refrigerant channel 71, a portion of the third internal refrigerant channel 73, the portion being disposed close to and in parallel with the second internal channel 42 and the first internal channel 41, and the second internal refrigerant channel 72 is collectively referred to as a parallel internal refrigerant channel 82.

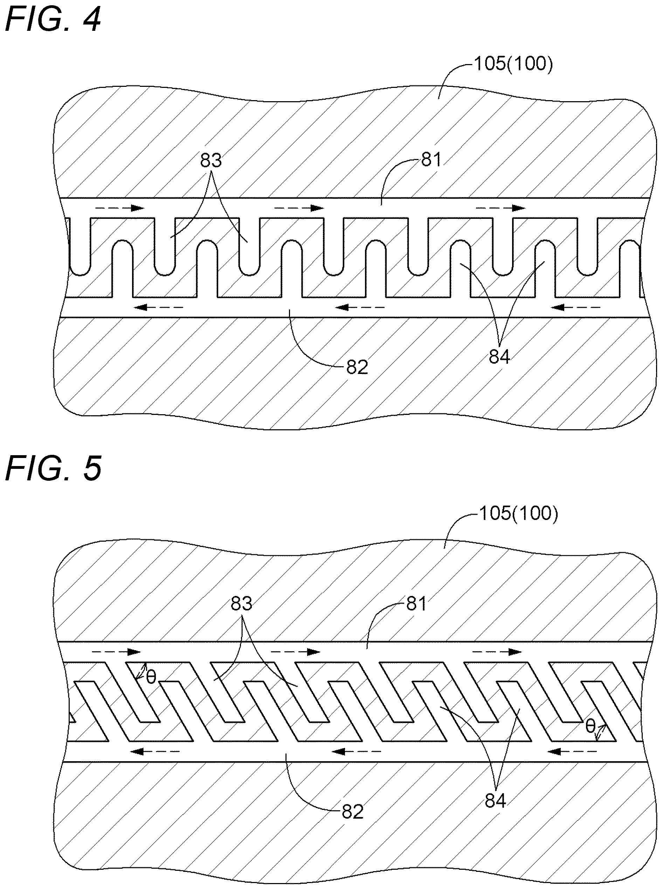

As shown in FIG. 4, in the present embodiment, a plurality of closed internal channels 83 (an example of a second channel) are branched from the parallel internal channel 81 in a direction perpendicular to a direction in which the parallel internal channel 81 extends. Furthermore, a plurality of closed internal refrigerant channels 84 (an example of a first channel) are branched from the parallel internal refrigerant channel 82 in a direction perpendicular to a direction in which the parallel internal refrigerant channel 82 extends. The closed internal channel 83 has a closed tip end and extends in a direction approaching the parallel internal refrigerant channel 82. Furthermore, the closed internal refrigerant channel 84 has a closed tip end and extends in a direction approaching the parallel internal channel 81. The closed internal channel 83 and the closed internal refrigerant channel 84 are disposed close to and in parallel with each other. Furthermore, each of the closed internal channel 83 and the closed internal refrigerant channel 84 has the identical cross-sectional shape as the parallel internal channel 81 and the parallel internal refrigerant channel 82, and have equal channel cross-sectional areas. A direction in which the cooling water flows through the parallel internal channel 81 is opposite to a direction in which the refrigerant flows through the parallel internal refrigerant channel 82.

With the manifold 100 having such a configuration, heat can be exchanged between the cooling water and the refrigerant not only between the parallel internal channels 81 and the parallel internal refrigerant channels 82 but also between the closed internal channels 83 and the closed internal refrigerant channels 84. As a result, even if an interval between the parallel internal channels 81 and the parallel internal refrigerant channels 82 is the same as in the manifold 100 in the first embodiment, it is possible to obtain necessary and sufficient cooling performance by using a water-cooled condenser that is smaller than the water-cooled condenser 120 in the first embodiment. Note that there may not necessarily be the plurality of closed internal channels 83 and closed internal refrigerant channels 84, and there may be each one of the closed internal channel 83 and the closed internal refrigerant channel 84 (similar applies to the following modifications).

In a case where it is difficult to form the closed internal channels 83 and the closed internal refrigerant channels 84 by directly making holes in the channel housing 105, the channel housing 105 may be configured such that two housings (not shown) are joined. In this case, grooves that constitute the parallel internal channels 81, the parallel internal refrigerant channels 82, the closed internal channels 83, and the closed internal refrigerant channels 84 are formed on each of the joint surfaces of the two housings, and then the two housings are joined, by which the parallel internal channels 81, the parallel internal refrigerant channels 82, the closed internal channels 83, and the closed internal refrigerant channels 84 can be formed in the channel housing 105.

### [Modification of second embodiment]

Next, the manifold 100 according to a modification of the second embodiment will be described. In the present modification, the closed internal channels 83 and the closed internal refrigerant channels 84 are different from those in the second embodiment. Because other configurations are similar to those in the second embodiment, detailed description of the similar configurations is omitted.

In the present modification, as shown in FIG. 5, the closed internal channels 83 extend not in perpendicular to the parallel internal channel 81, but in a direction of a branching angle θ (an example of an acute angle) that makes an acute angle relative to the direction in which the cooling water flows. Furthermore, the closed internal refrigerant channels 84 extend not in a direction perpendicular to a parallel internal refrigerant channel 82, but in a direction of a branching angle θ that makes an acute angle with the direction in which the refrigerant flows.

Because the closed internal channels 83 branch at the branching angle θ in an acute angle direction with respect to the direction in which the cooling water flows through the parallel internal channel 81, and the closed internal refrigerant channels 84 branch at the branching angle θ in an acute angle direction with respect to the direction in which the refrigerant flows through the parallel internal refrigerant channel 82, the closed internal channels 83 and the closed internal refrigerant channels 84 are disposed close to and in parallel with each other. With this configuration, even if an interval between the parallel internal channel 81 and the parallel internal refrigerant channel 82 is the same as the interval in the second embodiment, lengths of the closed internal channels 83 and the closed internal refrigerant channels 84 can be longer than in the second embodiment. Thus, heat can be more efficiently exchanged between the closed internal channels 83 and the closed internal refrigerant channels 84 than in the second embodiment, and thus it is possible to obtain necessary and sufficient cooling performance even if a smaller water-cooled condenser 120 is used. Furthermore, because the closed internal channels 83 and the closed internal refrigerant channels 84 branch in the acute angle direction with respect to the directions in which the cooling water and the refrigerant flow, it is possible to minimize pressure loss of the cooling water and the refrigerant when the cooling water and the refrigerant flow into the closed internal channels 83 and the closed internal refrigerant channels 84.

### [Another modification of second embodiment]

Next, the manifold 100 according to another modification of the second embodiment will be described. In the present modification, the closed internal channels 83 and the closed internal refrigerant channels 84 are different from those in the second embodiment and the modification thereof. Because other configurations are similar to those in the second embodiment, detailed description of the similar configurations is omitted.

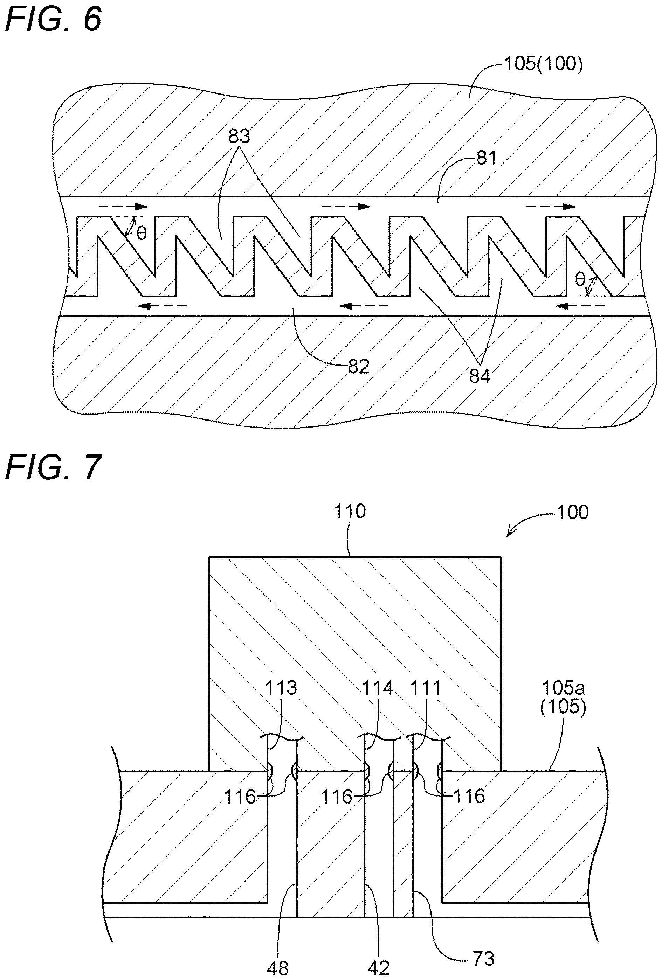

As shown in FIG. 6, in the present modification, each of the closed internal channels 83 and the closed internal refrigerant channels 84 has a right triangle shape in plan view, and includes a hypotenuse and an adjacent side thereof of the right triangle. Another adjacent side is a part of the parallel internal channel 81. Of the closed internal channel 83, a portion corresponding to the hypotenuse of the right triangle extends in a direction of the branching angle θ that makes an acute angle relative to the direction in which the cooling water flows, and a portion corresponding to the adjacent side is perpendicular to the direction in which the cooling water flows. Furthermore, of the closed internal refrigerant channel 84, a portion corresponding to the hypotenuse of the right triangle extends in a direction of the branching angle θ that makes an acute angle relative to the direction in which the refrigerant flows, and a portion corresponding to the adjacent side is perpendicular to the direction in which the refrigerant flows. That is, also in the present modification, the closed internal channel 83 and the closed internal refrigerant channel 84 are disposed such that the portions corresponding to the hypotenuses and the portions corresponding to the adjacent sides are close to and in parallel with each other.

Because the portions corresponding to the hypotenuses of the closed internal channels 83 branch at the branching angle θ in the acute angle direction with respect to the direction in which the cooling water flows through the parallel internal channel 81, and the portions corresponding to the hypotenuses of the closed internal refrigerant channels 84 branch at the branching angle θ in the acute angle direction with respect to the direction in which the refrigerant flows through the parallel internal refrigerant channel 82, the portions corresponding to the hypotenuses and the portions corresponding to the adjacent sides of the closed internal channels 83 and the closed internal refrigerant channels 84 are disposed close to and in parallel with each other. By configuring the closed internal channels 83 and the closed internal refrigerant channels 84 in this manner, even if an interval between the parallel internal channel 81 and the parallel internal refrigerant channel 82 is the same as the interval in the second embodiment, lengths of the closed internal channels 83 and the closed internal refrigerant channels 84 (a sum of a length of the hypotenuse and a length of the adjacent side in plan view) can be longer than in the second embodiment. Thus, heat can be more efficiently exchanged between the closed internal channels 83 and the closed internal refrigerant channels 84 than in the second embodiment, and thus it is possible to obtain necessary and sufficient cooling performance even if a smaller water-cooled condenser 120 is used. Furthermore, because the portions corresponding to the hypotenuses of the closed internal channels 83 and the closed internal refrigerant channels 84 branch in the acute angle direction with respect to the directions in which the cooling water and the refrigerant flow, and the portions corresponding to the adjacent sides of the closed internal channels 83 and the closed internal refrigerant channels 84 branch in a direction perpendicular to the directions in which the cooling water and the refrigerant flow, it is possible to minimize pressure loss of the cooling water and the refrigerant when the cooling water and the refrigerant flow into and flow out from the closed internal channels 83 and the closed internal refrigerant channels 84.

### [Another embodiment of first embodiment and second embodiment]

In the first embodiment and the second embodiment, the directions in which the cooling water flows and in which the refrigerant flows for heat exchange are opposite to each other in the channel housing 105, but the flow directions may be the same. In this case, the chiller 110 may be provided on the upstream side, and the water-cooled condenser 120 may be provided on the downstream side.

In the first embodiment and the second embodiment, the channels for heat exchange in the channel housing 105 have a linear shape or an L shape, but the present invention is not limited thereto. The chiller 110 and the water-cooled condenser 120 can be further downsized by lengthen the channels for heat exchange as long as a process is possible. Furthermore, the channels for heat exchange may be configured to exchange heat with a plate member.

### [Third embodiment]

### [Configuration of cooling system]

A cooling system A including a manifold 100 according to a third embodiment is similar to the cooling system A according to the first embodiment shown in FIG. 1. Furthermore, a schematic configuration of the manifold 100 is also similar to the schematic configuration of the manifold 100 in FIG. 2.

Hereinafter, a method for fixing a chiller 110 to a channel housing 105 will be described with reference to FIGS. 2 and 7. The chiller 110 is fixed to a channel housing 105 by being directly connected to a third internal refrigerant channel 73, a first internal refrigerant channel 71, an eighth internal channel 48, and a second internal channel 42. The chiller 110 includes a refrigerant inlet 111 through which a refrigerant flows in, a refrigerant outlet 112 through which the refrigerant flows out, a cooling water inlet (an example of a "coolant inlet") 113 through which cooling water flows in, and a cooling water outlet (an example of a "coolant outlet") 114 through which the cooling water flows out. Then, the third internal refrigerant channel 73 and the refrigerant inlet 111, the first internal refrigerant channel 71 and the refrigerant outlet 112, the eighth internal channel 48 and the cooling water inlet 113, and the second internal channel 42 and the cooling water outlet 114 are joined by brazing using brazing materials 116. The brazing is characterized in that a shape and material of each housing hardly change and joint strength is high, by performing joining at a temperature near a melting temperature of the brazing material 116 having a melting point lower than melting points of the channel housing 105 and the housing of the chiller 110. Furthermore, because the joining is performed by filling the brazing materials 116, airtightness and liquid tightness of joint portions are excellent.

Conventionally, a chiller is fixed to the channel housing 105 with bolts or the like. Therefore, a plurality of bolts, pipes connecting channels and heat exchangers, and sealing materials for preventing leakage of a refrigerant and cooling water are required, resulting in an increase in the number of parts and man-hours for fixing the chiller and an increase in a volume of the chiller. However, in the present embodiment, by joining the channels and the inlet and outlet of the chiller 110 with brazing, it is possible to simultaneously achieve fixing of the chiller 110 to the channel housing 105 without bolts or the like (high joint strength and downsizing), communication between the channels and the chiller 110 (piping is unnecessary), and ensuring of airtightness and watertightness of the joint portions (sealing material is unnecessary). Therefore, it is possible to implement the manifold 100 that is small in size and low in cost by reducing the number of parts and man-hours.

The channel housing 105 of the present embodiment is configured by joining an upper housing 105a and a lower housing 105b. As shown in FIG. 2, the third internal refrigerant channel 73, the first internal refrigerant channel 71, the eighth internal channel 48, and the second internal channel 42 penetrate the upper housing 105a from a boundary surface between the upper housing 105a and the lower housing 105b. After the inlet and outlet of the chiller 110 are positioned on these penetrating channels, the brazing materials 116 are applied to respective boundaries of the third internal refrigerant channel 73 and the refrigerant inlet 111, the first internal refrigerant channel 71 and the refrigerant outlet 112, the eighth internal channel 48 and the cooling water inlet 113, and the second internal channel 42 and the cooling water outlet 114. Then, a brazing tool is inserted into each of the third internal refrigerant channel 73, the first internal refrigerant channel 71, the eighth internal channel 48, and the second internal channel 42 from a lower surface of the upper housing 105a (boundary surface with the lower housing 105b) to perform brazing. At this time, the thinner a thickness of the upper housing 105a, more easily the brazing tool is inserted, so that brazing can be easily performed.

### [Fourth embodiment]

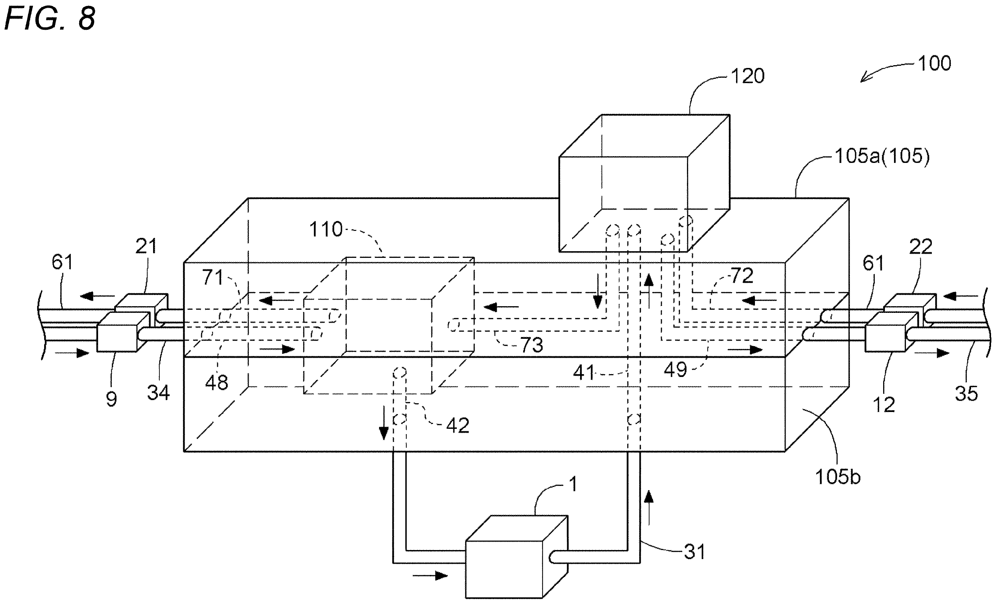

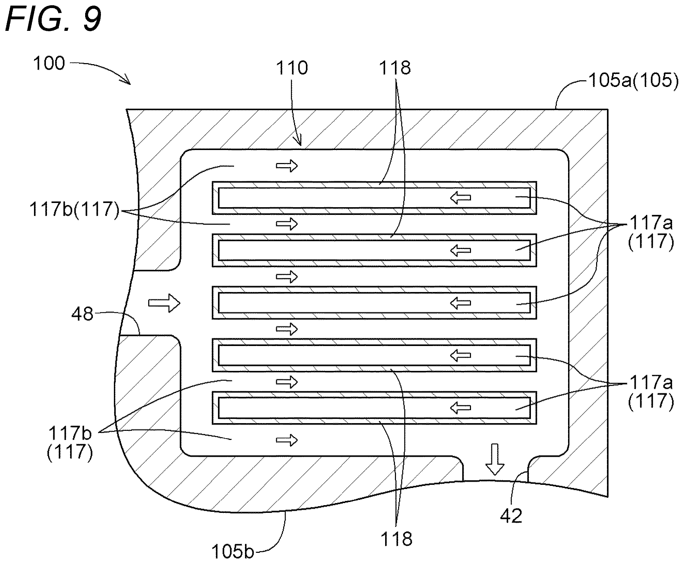

Next, a manifold 100 according to a fourth embodiment will be described with reference to FIGS. 8 and 9. In the present embodiment, a chiller 110 is disposed inside a channel housing 105. Specifically, channels having a heat exchange function of the chiller 110 is formed in the channel housing 105. Other configurations are similar to the configurations in the third embodiment. Therefore, in description of the present embodiment, parts having configurations similar to those in the third embodiment are denoted by the same reference signs, and detailed description of the similar configurations is omitted.

The channel housing 105 is configured by joining an upper housing 105a and a lower housing 105b. Then, heat exchange channels 117 (an example of stacked channels) are formed from the upper housing 105a to the lower housing 105b in the channel housing 105. The heat exchange channels 117 are configured by alternately stacking a plurality of heat-exchange refrigerant channels 117a (an example of the stacked channels) and a plurality of heat-exchange cooling water channels 117b (an example of the stacked channels). The plurality of heat-exchange cooling water channels 117b are connected to an eighth internal channel 48 and a second internal channel 42, respectively. In FIG. 9, the plurality of heat-exchange refrigerant channels 117a are drawn as independent channels, but are actually connected to a third internal refrigerant channel 73 and a first internal refrigerant channel 71. Channel walls 118 that define the heat-exchange refrigerant channels 117a and the heat-exchange cooling water channels 117b are supported by the channel housing 105.

As described above, by disposing the chiller 110 inside the channel housing 105, the manifold 100 can be downsized as compared with a case where the chiller 110 is externally attached to the channel housing 105.

### [Another embodiment of third embodiment and fourth embodiment]

(1) In the third embodiment and the fourth embodiment, the chiller 110 is fixed to the channel housing 105 with brazing, but the present invention is not limited thereto. As long as the joint strength, airtightness, liquid tightness, and the like of the chiller 110 with respect to the channel housing 105 can be ensured, the joining may be performed by using any method, such as welding, instead of brazing.
(2) In the third embodiment and the fourth embodiment, joining and fixing of the chiller 110 to the channel housing 105 have been described, but the joining and fixing are similarly applicable to the water-cooled condenser 120 and other heat exchangers.

### [Fifth embodiment]

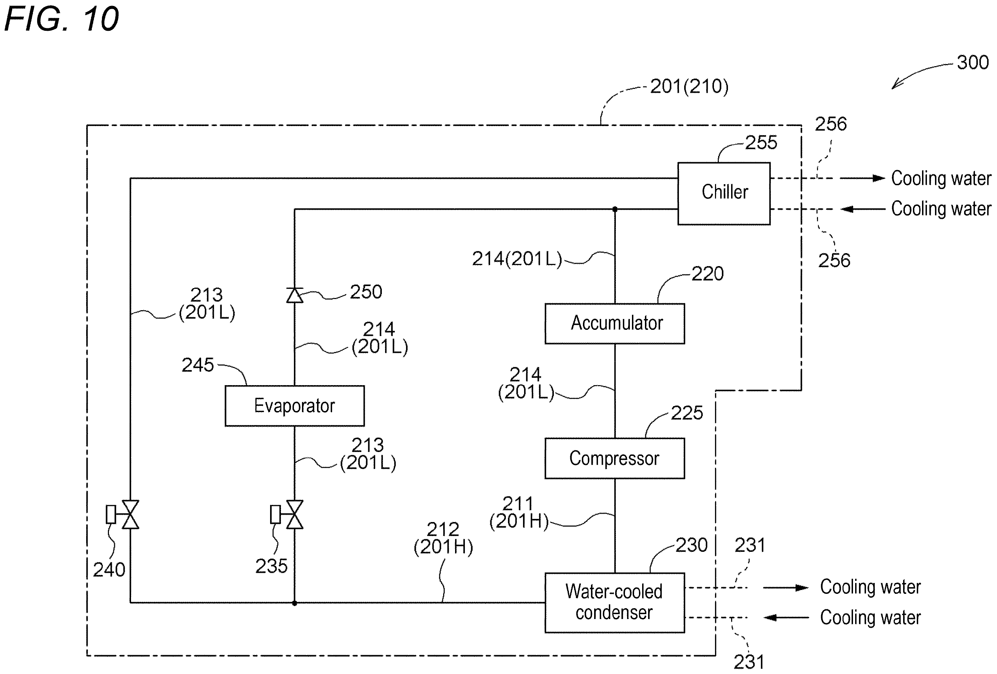

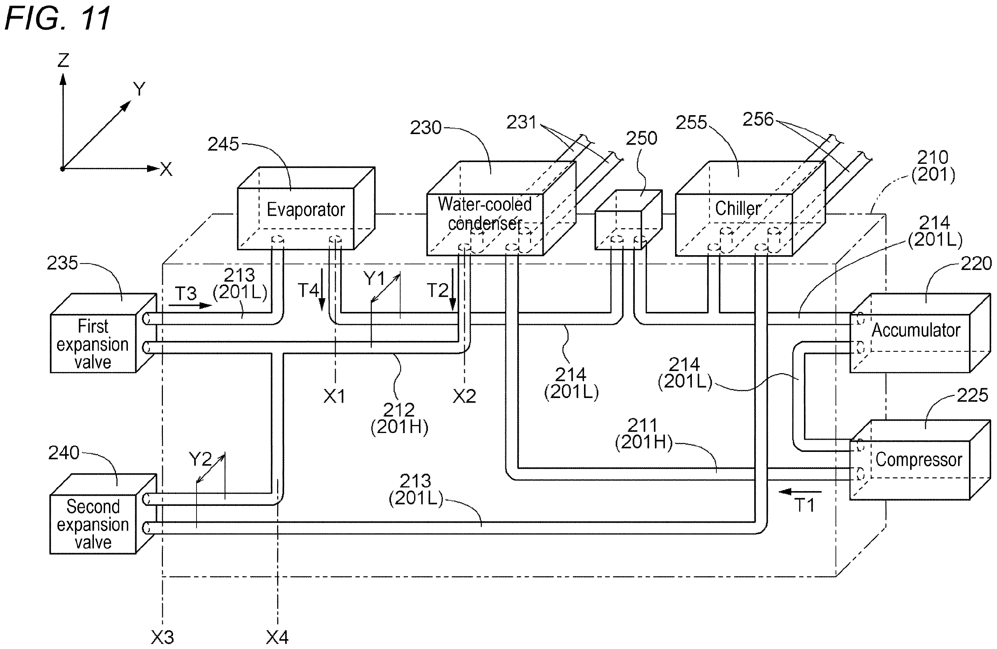

FIG. 10 is a circuit configuration diagram of a cooling system 300 including a manifold 201 according to the present embodiment. FIG. 11 is a diagram showing a schematic configuration of the manifold 201 according to the present embodiment. The manifold 201 includes, for example, a refrigerant circuit in which a refrigerant such as hydrofluorocarbon (HFC) or hydrofluoroolefin (HFO) flows.

The manifold 201 includes a channel housing 210. The channel housing 210 is formed by using, for example, a metal material containing a material having high thermal conductivity, such as aluminum, and includes a first refrigerant channel (an example of a "first channel") 211, a second refrigerant channel (an example of the "first channel") 212, a third refrigerant channel (an example of a "second channel") 213, and a fourth refrigerant channel (an example of the "second channel") 214 that are formed by making holes in such a metal material. An on-off valve (not shown) is provided on an upstream side of a first expansion valve 235 of the third refrigerant channel 213. The first expansion valve 235 will be described later. For example, in a case where the manifold 201 is provided in a vehicle, the on-off valve is opened when an interior cooler is used in the vehicle, and the on-off valve is closed when the interior cooler is not used.

Here, as shown in FIG. 11, an accumulator 220, a compressor (an example of a "compressor") 225, a water-cooled condenser (an example of a "condenser") 230, a first expansion valve (an example of an "expansion valve") 235, a second expansion valve 240, an evaporator (an example of an "evaporator") 245, a check valve 250, and a chiller (an example of the "evaporator") 255 are provided outside the channel housing 210. In the present embodiment, the water-cooled condenser 230, the evaporator 245, the check valve 250, and the chiller 255 are integrated with the channel housing 210. Note that auxiliary units integrated with the channel housing 210 are arbitrary, and are not particularly limited.

The first refrigerant channel 211 is a channel that allows the refrigerant (an example of a "first cooling fluid") to flow between a compressor 225 and the water-cooled condenser 230. The second refrigerant channel 212 is a channel that allows the refrigerant (an example of the "first cooling fluid") to flow between the water-cooled condenser 230 and the first expansion valve 235 and/or the second expansion valve 240. The third refrigerant channel 213 is a channel that allows the refrigerant (an example of a "second cooling fluid") to flow between the first expansion valve 235 and the second expansion valve 240, and between the evaporator 245 and the chiller 255. The fourth refrigerant channel 214 is a channel that allows the refrigerant (an example of the "second cooling fluid") to flow between the evaporator 245 and/or the chiller 255, and the compressor 225.

The accumulator 220 is a gas-liquid separator that stores the refrigerant in a state of liquid and performs gas-liquid separation of the refrigerant. The gaseous refrigerant separated by the accumulator 220 flows through the fourth refrigerant channel 214 and is sent to the compressor 225.

The compressor 225 compresses the gaseous refrigerant from the accumulator 220. Thus, pressure of the refrigerant increases and a temperature thereof (referred to as "T1") increases. The refrigerant turned into high-temperature and high-pressure gas is sent to the water-cooled condenser 230 via the first refrigerant channel 211.

The cooling water flows into the water-cooled condenser 230 through a cooling water channel 231 different from the first refrigerant channel 211 and the second refrigerant channel 212. The high-temperature and high-pressure gaseous refrigerant sent to the water-cooled condenser 230 is deprived of heat by the cooling water. Thus, the high-temperature and high-pressure gaseous refrigerant is condensed to be a medium-temperature and high-pressure liquid refrigerant. That is, the temperature of the refrigerant decreases from T1 to T2. The medium-temperature and high-pressure liquid refrigerant is sent to the first expansion valve 235 and/or the second expansion valve 240 via the second refrigerant channel 212.

The first expansion valve 235 is configured such that a channel area thereof sharply decreases from a channel area of the second refrigerant channel 212, and merely a small amount of refrigerant flows through the first expansion valve 235. Thus, the pressure of the refrigerant decreases, the temperature of the refrigerant decreases as the pressure decreases, and the gaseous refrigerant is mixed into the liquid refrigerant. The low-temperature and low-pressure refrigerant is sent to the evaporator 245 via third refrigerant channel 213. Here, it is assumed that the temperature of the refrigerant has decreased to T3.

In the evaporator 245, outside air is taken in, and heat is exchanged between the outside air and the low-temperature and low-pressure refrigerant. Thus, the temperature of the refrigerant rises, and the refrigerant changes to a gaseous refrigerant, and the outside air is cooled and utilized for interior cooling. The refrigerant turned into medium-temperature and low-pressure gas is sent to the accumulator 220 through the check valve 250 and the fourth refrigerant channel 214. A temperature of the refrigerant sent from the evaporator 245 at this time is defined as T4. T4 is a temperature higher than T3 and lower than T2.

Some or all of the refrigerant condensed by the water-cooled condenser 230 branches from the second refrigerant channel 212 and is sent to the second expansion valve 240. In the second expansion valve 240, similarly to the first expansion valve 235, the medium-temperature and high-pressure liquid refrigerant is changed to a low-temperature and low-pressure refrigerant. The low-temperature and low-pressure refrigerant is sent to the chiller 255 via the third refrigerant channel 213.

The cooling water flows into the chiller 255 through a cooling water channel 256 different from the third refrigerant channel 213 and the fourth refrigerant channel 214. The low-temperature and low-pressure refrigerant sent to the chiller 255 cools the cooling water to gain heat. Thus, the refrigerant changes to the medium-temperature and low-pressure gaseous refrigerant. The refrigerant turned into gas is sent to the accumulator 220 through the fourth refrigerant channel 214. The refrigerant sent from the chiller 255 through the fourth refrigerant channel 214 does not flow to the evaporator 245 by the check valve 250.

As described above, the high-temperature and high-pressure refrigerant (refrigerant at the temperature T1) is sent from the compressor 225 to the first refrigerant channel 211, and the medium-temperature and high-pressure refrigerant (refrigerant at the temperature T2) is sent from the water-cooled condenser 230 to the second refrigerant channel 212. Furthermore, the low-temperature and low-pressure refrigerant (refrigerant at the temperature T3) is sent from the first expansion valve 235 to the third refrigerant channel 213, and the medium-temperature and low-pressure refrigerant (refrigerant at the temperature T4) is sent from the evaporator 245 and/or the chiller 255 to the fourth refrigerant channel 214. Here, the formula T1 > T2 > T4 > T3 holds. That is, in the present embodiment, the temperature T2 of the refrigerant sent to the second refrigerant channel 212 is higher than the temperature T4 of the refrigerant sent to the fourth refrigerant channel 214. Therefore, in the manifold 201, the first refrigerant channel 211 and the second refrigerant channel 212 correspond to a high-temperature channel 201H, and the third refrigerant channel 213 and the fourth refrigerant channel 214 correspond to a low-temperature channel 201L.

The channel housing 210 is configured to exchange heat between a high-temperature channel 201H and a low-temperature channel 201L. In the present embodiment, heat is exchanged between the second refrigerant channel 212 that is a high-temperature channel 201H and the fourth refrigerant channel 214 that is a low-temperature channel 201L. The second refrigerant channel 212 and the fourth refrigerant channel 214 are provided close to and in parallel with each other in the channel housing 210. In the present embodiment, the second refrigerant channel 212 through which the refrigerant flows from the water-cooled condenser 230 toward the first expansion valve 235 and/or the second expansion valve 240, and the fourth refrigerant channel 214 through which the refrigerant flows from the evaporator 245 toward the accumulator 220 via the check valve 250 are provided in parallel with each other between X1 and X2 along an X direction. Furthermore, in order to improve heat exchange efficiency, an interval Y1 in a Y direction orthogonal to the X direction is configured to be short. The interval Y1 may be set on the basis of machining accuracy when the second refrigerant channel 212 and the fourth refrigerant channel 214 are formed by drilling (may be made closer). Furthermore, the refrigerant channel for heat exchange may be formed on a split surface of the channel housing 210.

Between X1 and X2, the refrigerant flows from X2 toward X1 in the second refrigerant channel 212, and the refrigerant flows from X1 toward X2 in the fourth refrigerant channel 214. Therefore, in the present embodiment, the directions in which the refrigerant flows are opposite to each other between the high-temperature channel 201H and the low-temperature channel 201L. Thus, the refrigerant flowing through the second refrigerant channel 212 exchanges heat with the refrigerant flowing through the fourth refrigerant channel 214, and the refrigerant flowing through the fourth refrigerant channel 214 exchanges heat with the refrigerant flowing through the second refrigerant channel 212. A temperature of the refrigerant flowing through the high-temperature channel 201H gradually decreases as the refrigerant flows through the high-temperature channel 201H in a first direction (X2 to X1), and a temperature of the refrigerant flowing through the low-temperature channel 201L gradually increases as the refrigerant flows through the low-temperature channel 201L in a second direction (X1 to X2) opposite to the first direction. That is, because a difference in temperature between the high-temperature channel 201H and low-temperature channel 201L in a region where heat is exchanged is equalized, heat exchange efficiency can be improved. Therefore, heat exchange can be efficiently performed.

Furthermore, in the present embodiment, the second refrigerant channel 212 through which the refrigerant flows from the water-cooled condenser 230 toward the second expansion valve 240, and the third refrigerant channel 213 through which the refrigerant flows from the second expansion valve 240 toward the chiller 255 are provided in parallel with each other between X3 and X4 along the X direction. Furthermore, in order to improve heat exchange efficiency, an interval Y2 in a Y direction orthogonal to the X direction is configured to be short. The interval Y2 may be set on the basis of machining accuracy when the second refrigerant channel 212 and the third refrigerant channel 213 are formed by drilling (may be made closer). Furthermore, the refrigerant channel for heat exchange may be formed on the split surface of the channel housing 210.

Between X3 and X4, the refrigerant flows from X4 toward X3 in the second refrigerant channel 212, and the refrigerant flows from X3 toward X4 in the third refrigerant channel 213. Therefore, here also, the directions in which the refrigerant flows are opposite to each other between the high-temperature channel 201H and the low-temperature channel 201L. Thus, the refrigerant flowing through the second refrigerant channel 212 exchanges heat with the refrigerant flowing through the third refrigerant channel 213, and the refrigerant flowing through the third refrigerant channel 213 exchanges heat with the refrigerant flowing through the second refrigerant channel 212. The temperature of the refrigerant flowing through the high-temperature channel 201H gradually decreases as the refrigerant flows through the high-temperature channel 201H in the first direction (X4 to X3), and the temperature of the refrigerant flowing through the low-temperature channel 201L gradually increases as the refrigerant flows through the low-temperature channel 201L in the second direction (X3 to X4) opposite to the first direction. That is, because a difference in temperature between the high-temperature channel 201H and low-temperature channel 201L in a region where heat is exchanged is equalized, heat exchange efficiency can be improved. Therefore, heat exchange can be efficiently performed.

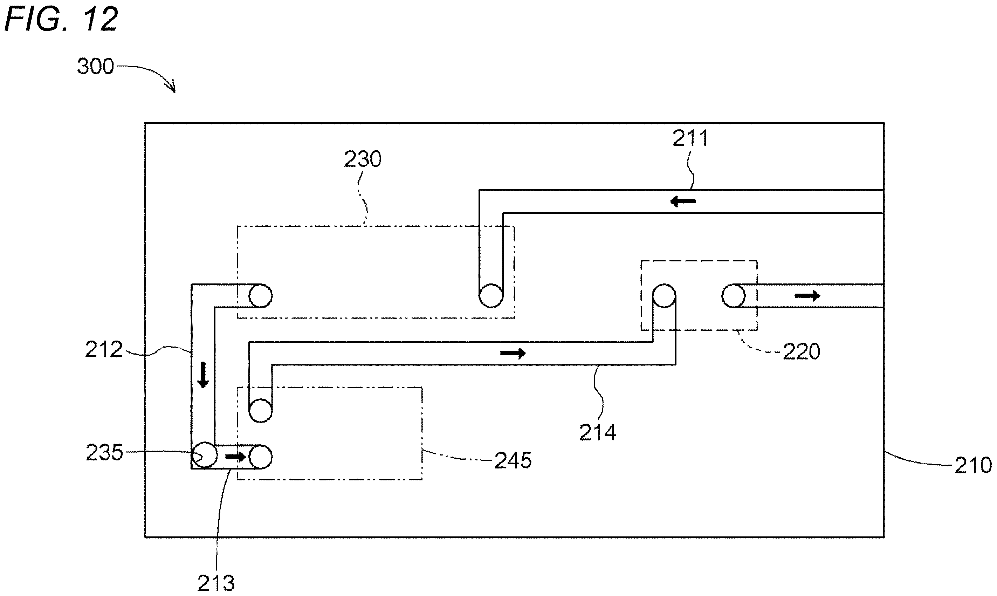

FIG. 12 is a diagram showing a relationship between the second refrigerant channel 212 and the fourth refrigerant channel 214 and other channels according to the present embodiment. As shown in FIG. 12, the second refrigerant channel 212 that allows the refrigerant to flow between the water-cooled condenser 230 and the first expansion valve 235, and the fourth refrigerant channel 214 that allows the refrigerant to flow between the evaporator 255 and the compressor 225 are provided at intervals shorter than intervals between the other channels provided in the channel housing 210. The second refrigerant channel 212 is a refrigerant channel through which the refrigerant flows from the water-cooled condenser 230 to the first expansion valve 235. The fourth refrigerant channel 214 is a refrigerant channel through which the refrigerant flows from the evaporator 245 to the compressor 225 via the accumulator 220. The other channels provided in the channel housing 210 correspond to the first refrigerant channel 211 through which the refrigerant flows from the compressor 225 to the water-cooled condenser 230, and the third refrigerant channel 213 through which the refrigerant flows from the first expansion valve 235 to the evaporator 245. Therefore, the second refrigerant channel 212 and the fourth refrigerant channel 214 are provided at an interval shorter than an interval between the first refrigerant channel 211 and the third refrigerant channel 213.

That is, in a vicinity of the evaporator 245, the fourth refrigerant channel 214 is configured closer to the second refrigerant channel 212 than to the first refrigerant channel 211 and the third refrigerant channel 213.

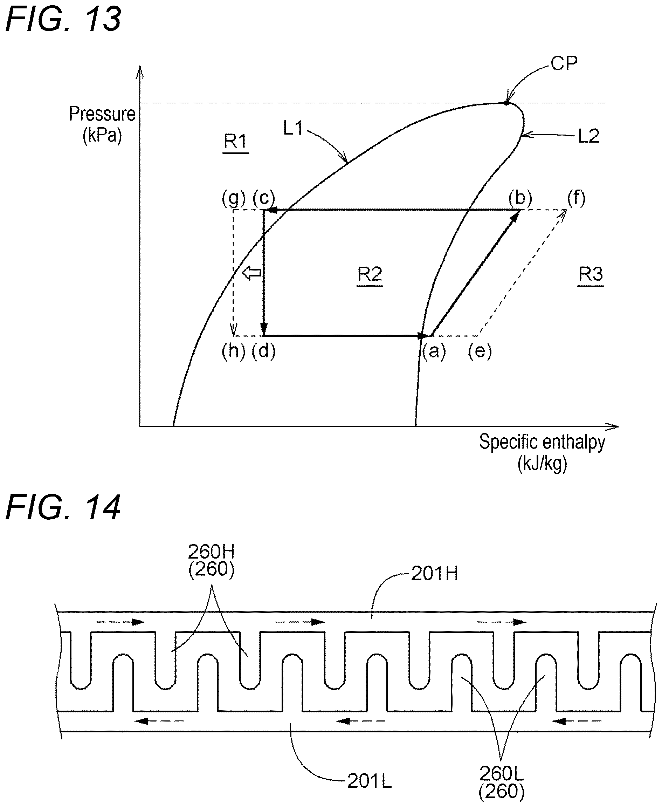

FIG. 13 is a Mollier diagram showing a heat cycle in the cooling system 300. In FIG. 13, the horizontal axis represents a specific enthalpy of the refrigerant, and the vertical axis represents the pressure of the refrigerant. In the Mollier diagram, according to a combination of the specific enthalpy and the pressure, the refrigerant is divided into a region R1 in which the refrigerant is present in a supercooled state (liquid state), a region R2 in which the refrigerant is present in a wet vapor state (gas-liquid mixed state), and a region R3 in which the refrigerant is present as superheated vapor (gas state). A boundary line between the supercooled state and the wet vapor state is a saturated liquid line L1, and a boundary line between the wet vapor state and a superheated vapor state is a saturated vapor line L2. A boundary point between the saturated liquid line L1 and the saturated vapor line L2 corresponds to a critical point CP.

When the refrigerant is pressurized (compressed) by the compressor 225, the specific enthalpy increases, and the medium-temperature and low-pressure gaseous refrigerant denoted by (a) in FIG. 13 turns into the high-temperature and high-pressure gaseous refrigerant denoted by (b) in FIG. 13. The high-temperature and high-pressure refrigerant denoted by (b) in FIG. 13 is condensed when sent to the water-cooled condenser 30, and the small specific enthalpy decreases under equal pressure. Thus, a medium-temperature and high-pressure liquid refrigerant denoted by (c) in FIG. 13 is obtained. The medium-temperature and high-pressure refrigerant denoted by (c) in FIG. 13 expands in the first expansion valve 235, and the pressure decreases. Therefore, a low-temperature and low-pressure, gas-liquid mixed refrigerant denoted by (d) in FIG. 13 is obtained. The low-temperature and low-pressure refrigerant denoted by (d) in FIG. 13 evaporates in the evaporator 245, and the small specific enthalpy increases under equal pressure. Thus, a medium-temperature and low-pressure gaseous refrigerant denoted by (a) in FIG. 13 is obtained.

As in the present embodiment, in the channel housing 210, heat exchange between the second refrigerant channel 212 that is a high-temperature channel 201H and the fourth refrigerant channel 214 that is a low-temperature channel 201L can warm the refrigerant pressurized by the compressor 225 in advance. Thus, the specific enthalpy of the refrigerant before pressurization can be increased, and the refrigerant generated by the compressor 225 is compressed along the broken lines denoted by (e) to (f). Meanwhile, the heat exchange between the second refrigerant channel 212 that is a high-temperature channel 201H and the fourth refrigerant channel 214 that is a low-temperature channel 201L can cool the refrigerant condensed by the water-cooled condenser 230 in advance. Thus, the specific enthalpy of the refrigerant before being expanded by the first expansion valve 235 can be decreased, and the refrigerant expands in the first expansion valve 235, along the broken lines denoted by (g) to (h).

As described above, in the channel housing 210, by heat exchange between the second refrigerant channel 212 that is a high-temperature channel 201H and the fourth refrigerant channel 214 that is a low-temperature channel 201L, the refrigerant pressurized by the compressor 225 further turns into superheated vapor, and the refrigerant sent to the first expansion valve 235 is further supercooled. Therefore, a coefficient of performance can be improved with a compact configuration.

### [Another embodiment of fifth embodiment]

In the embodiment described above, it is described that, in the channel housing 210, heat is exchanged between the second refrigerant channel 212 that is a high-temperature channel 201H and the fourth refrigerant channel 214 that is a low-temperature channel 201L. For example, in the channel housing 210, heat may be exchanged between the first refrigerant channel 211 that is a high-temperature channel 201H and the third refrigerant channel 213 as a low-temperature channel 201L. Furthermore, heat may be exchanged between the first refrigerant channel 211 that is a high-temperature channel 201H and the fourth refrigerant channel 214 that is a low-temperature channel 201L, or heat may be exchanged between the second refrigerant channel 212 that is a high-temperature channel 201H and the third refrigerant channel 213 that is a low-temperature channel 201L. Moreover, heat may be exchanged between the first refrigerant channel 211 and second refrigerant channel 212 that are the high-temperature channels 201H, and the third refrigerant channel 213 that is a low-temperature channel 201L, or heat may be exchanged between the first refrigerant channel 211 and second refrigerant channel 212 that are the high-temperature channels 201H and the fourth refrigerant channel 214 that is a low-temperature channel 201L. Needless to say, heat may be exchanged between the first refrigerant channel 211 that is a high-temperature channel 201H and the third refrigerant channel 213 and fourth refrigerant channel 214 that are the low-temperature channels 201L, or heat may be exchanged between the second refrigerant channel 212 that is a high-temperature channel 201H and the third refrigerant channel 213 and fourth refrigerant channel 214 that are the low-temperature channels 201L.

In the fifth embodiment above, it has been described that the high-temperature channels 201H and the low-temperature channels 201L are provided close to and in parallel with each other. However, the high-temperature channels 201H and the low-temperature channels 201L may be provided close to each other without being parallel with each other, or the high-temperature channels 201H and the low-temperature channels 201L may be provided so as to intersect each other. Furthermore, forms of the high-temperature channels 201H and low-temperature channels 201L provided close to and in parallel with each other may be, for example, meandering channels, and are not particularly limited.

In the fifth embodiment, it has been described that the directions in which the refrigerant flows are opposite to each other between the high-temperature channels 201H and the low-temperature channels 201L. However, the directions in which the refrigerant flows may be the same between the high-temperature channels 201H and the low-temperature channels 201L.

In FIG. 11 of the fifth embodiment, the high-temperature channels 201H and the low-temperature channels 201L are shown as extending along a predetermined direction (X direction). In each of the high-temperature channels 201H and the low-temperature channels 201L, comb-tooth shaped portions 260 protruding from one side of a high-temperature channel 201H and of a low-temperature channel 201L toward another side of the high-temperature channel 201H and of the low-temperature channel 201L may be formed. The high-temperature channel 201H and low-temperature channel 201L in which the comb-tooth shaped portions 260 are formed are shown in FIG. 14. As shown in FIG. 14, the high-temperature channel 201H is provided with the comb-tooth shaped portions 260 (specifically, comb-tooth shaped portions 260H) protruding from the high-temperature channel 201H toward the low-temperature channel 201L, and the low-temperature channel 201L is provided with the comb-tooth shaped portions 260 (specifically, the comb-tooth shaped portions 260L) protruding from the low-temperature channel 201L toward the high-temperature channel 201H. As shown in FIG. 14, the comb-tooth shaped portions 260H and the comb-tooth shaped portions 260L are configured in a state where each of the comb-tooth shaped portions 260H enters between two comb-tooth shaped portions 260L, and are configured in a state where each of the comb-tooth shaped portions 260L enters between two comb-tooth shaped portions 260H. Thus, it is possible to increase a region (area contributing to heat exchange) where the high-temperature channels 201H and the low-temperature channels 201L are close to each other to improve heat exchange efficiency.

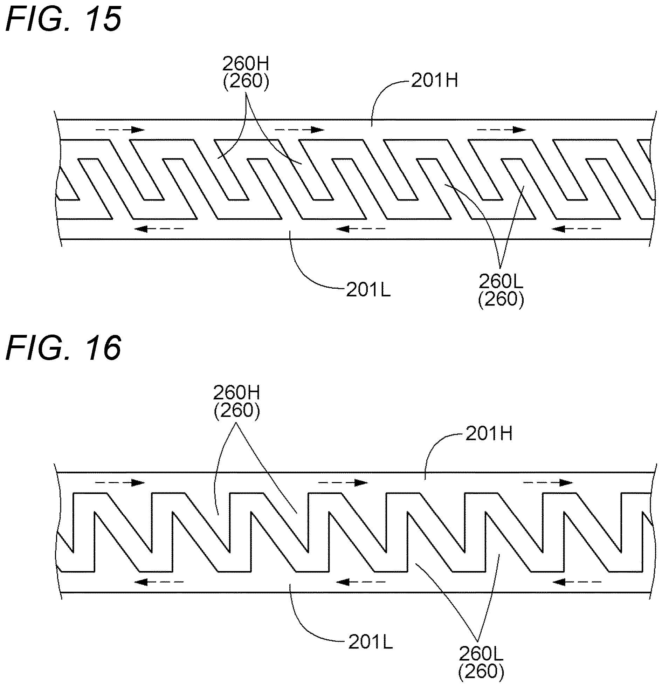

Furthermore, in the example in FIG. 14, the comb-tooth shaped portions 260 are formed to protrude from each of the high-temperature channel 201H and the low-temperature channel 201L along a direction orthogonal to the high-temperature channel 201H and the low-temperature channel 201L. However, as shown in FIG. 15, the comb-tooth shaped portions 260 may be formed to have an obtuse angle with respect to the orthogonal direction, or may protrude in an arc shape. Furthermore, as shown in FIG. 16, the comb-tooth shaped portions 260 may have a triangle shape in plan view. In this case, for example, each of the comb-tooth shaped portions may have a triangle shape having a side making an obtuse angle relative to an upstream side with respect to a direction in which the refrigerant flows through the high-temperature channel 201H and the low-temperature channel 201L and having a side orthogonal to a downstream side with respect to the direction in which the refrigerant flows through the high-temperature channel 201H and the low-temperature channel 201L. Needless to say, the side on the downstream side may make an acute angle relative to the downstream side with respect to the direction in which the refrigerant flows through the high-temperature channel 201H and the low-temperature channel 201L. With such a configuration, the refrigerant can easily enter the comb-tooth shaped portions 260. Therefore, it is possible to bring the high-temperature channel 201H and the low-temperature channel 201L close to each other without hindering flow of the refrigerant through the high-temperature channels 201H and the low-temperature channels 201L.

In the fifth embodiment above, it has been described that the channels in the channel housing 210 are formed by drilling, but it is also possible to form the channels by, for example, casting, forging, or the like.

### [Overview of above embodiments]

Hereinafter, an overview of the manifold 100, 201 described above will be described.

(1) A manifold 100, 201 is configured including a channel housing 105, 210 including a first channel 71, 72, 73 that allows a first cooling fluid to flow, and a second channel 41, 42, 48, 49 that allows a second cooling fluid to flow, in which, in the channel housing 105, 210, heat is exchanged between the first cooling fluid that flows through the first channel 71, 72, 73 and the second cooling fluid that flows through the second channel 41, 42, 48, 49.

According to the configuration, by exchanging heat between the first cooling fluid that flows through the first channel 71, 72, 73 provided in the channel housing 105, 210 of the manifold 100, 201 and the second cooling fluid that flows through the second channel 41, 42, 48, 49 provided in the channel housing 105, 210 of the manifold 100, 201, it is possible to obtain sufficient cooling performance even if a small heat exchanger is used. Furthermore, because heat can be exchanged in the channel housing 105, 210, the manifold 100, 201 can be downsized as compared with a case where the heat exchanger is externally attached to the channel housing 105, 210. Moreover, cooling of the first cooling fluid flowing through the first channel 71, 72, 73 and heating of the second cooling fluid flowing through the second channel 41, 42, 48, 49 can be performed in the channel housing 105, 210. By performing heat exchange between fluid in the channel housing 105, 210, it is possible to improve a coefficient of performance of, for example, a compressor 22, 225 and an expansion valve 26, 235, 240. Therefore, because heat can be exchanged by a small internal heat exchanger that cools and heats the fluid or without providing another such internal heat exchanger, the manifold 100, 201 can be downsized.

(2) In the manifold 100 according to (1), the first channel 71, 72, 73 is preferably a refrigerant channel that allows a refrigerant as the first cooling fluid to flow between an evaporator 110 and a condenser 120, and the second channel 41, 42, 48, 49 is preferably a cooling channel that allows a coolant as the second cooling fluid to flow at least to a battery 9.

According to the configuration, by exchanging heat not only in the evaporator 110, which is a heat exchanger, and a condenser 120, but also between the refrigerant flowing through the refrigerant channels provided in the channel housing 105 of the manifold 100, and the coolant flowing through the cooling channels provided in the channel housing 105 of the manifold 100, it is possible to obtain necessary cooling performance even if a small evaporator 110 or condenser 120 is used. Therefore, it is possible to provide the manifold 100 capable of obtaining sufficient cooling performance even if a small heat exchanger is used.

(3) In the manifold 100 according to (2), in the channel housing 105, a water-cooled condenser 120 as the condenser 120 for the refrigerant is preferably mounted at a position on an upstream side with respect to a direction in which the refrigerant flows, and a chiller 110 as the evaporator 110 for the refrigerant is preferably mounted at a position on a downstream side with respect to a direction in which the refrigerant flows.

According to the configuration, by disposing the water-cooled condenser 120 as the condenser 120 at the position on the upstream side with respect to the direction in which the refrigerant flows, it is possible to allow the refrigerant condensed by the water-cooled condenser 120 to flow to give heat to a low-temperature coolant. Therefore, a refrigerant that has not been condensed by the water-cooled condenser 120 can also be condensed. Furthermore, by disposing the chiller 110 as the evaporator 110 at a position on the downstream side with respect to the direction in which the refrigerant flows, it is possible to allow the refrigerant to flow before flowing into the chiller 110, to deprive high-temperature coolant of heat. Therefore, some of the refrigerant can be evaporated before flowing into the chiller 110.

(4) In the manifold 201 according to (1), the first channel is preferably a first refrigerant channel 211 that allows a refrigerant as the first cooling fluid to flow between a compressor 225 and a condenser 230, or a second refrigerant channel 212 that allows the refrigerant to flow between the condenser 230 and an expansion valve 235, and the second channel is preferably a third refrigerant channel 213 that allows the refrigerant as the second cooling fluid lower in temperature than the first cooling fluid to flow between the expansion valve 235, 240 and an evaporator 245, 255, or a fourth refrigerant channel 214 that allows the refrigerant to flow between the evaporator 245, 255 and the compressor 225.

According to the configuration, cooling of the refrigerant flowing through at least either the first refrigerant channel 211 or the second refrigerant channel 212 and heating of the refrigerant flowing through at least either the third refrigerant channel 213 or the fourth refrigerant channel 214 can be performed in the channel housing 210. By performing heat exchange between refrigerant in the channel housing 210, it is possible to improve a coefficient of performance of the compressor 225 and the expansion valve 235, 240. Therefore, because heat can be exchanged by a small internal heat exchanger that cools and heats the refrigerant or without providing another such internal heat exchanger, a heat exchange system can be downsized.

(5) In the manifold 100 according to (1), the first channel 71, 72, 73 is preferably a refrigerant channel that allows a refrigerant as the first cooling fluid to flow to a heat exchanger, the second channel 41, 42, 48, 49 is preferably a cooling channel that allows coolant as the second cooling fluid to flow to the heat exchanger, the heat exchanger preferably includes a refrigerant inlet 111 through which the refrigerant flows in, a refrigerant outlet 112 through which the refrigerant flows out, a coolant inlet 113 through which the coolant flows in, and a coolant outlet 114 through which the coolant flows out, and the heat exchanger is preferably fixed to the channel housing 105 by joining the refrigerant channel and the refrigerant inlet 111, the refrigerant channel and the refrigerant outlet 112, the cooling channel and the coolant inlet 113, and the cooling channel and the coolant outlet 114.

According to the configuration, the heat exchanger can be fixed to the channel housing 105 without using a bolt or the like, and thus, it is not necessary to provide a flange for attaching a bolt or the like to the heat exchanger, and the heat exchanger is downsized. Accordingly, it is possible to implement the manifold 100 small in size and low in cost.

(6) In the manifold 100 according to (5), the heat exchanger preferably includes stacked channels 117.

According to the configuration, functions necessary as a heat exchanger can be mounted in the manifold 100.

(7) In the manifold 100, 201 according to any one of (1) to (6), the first channel 71, 72, 73 and the second channel 41, 42, 48, 49 are preferably provided close to each other.

According to the configuration, heat can be exchanged easily between the first channel 71, 72, 73 and the second channel 41, 42, 48, 49, and thus heat exchange efficiency can be improved. Furthermore, disposition of the first channel 71, 72, 73 and the second channel 41, 42, 48, 49 is simplified, and the manifold 100, 201 can be downsized.

(8) In the manifold 201 according to any one of (1) to (7), comb-tooth shaped portions 260 protruding from one side of the first channel and of the second channel toward another side of the first channel and of the second channel are preferably formed in each of the first channel and the second channel.

According to the configuration, heat can be exchanged between the first cooling fluid and the second cooling fluid not only between the first channel and the second channel but also in the comb-tooth shaped portions 260. Furthermore, such comb-tooth shaped portions 260 can increase a region (area) where the first channel and the second channel are close to each other. Therefore, the heat exchange efficiency can be further improved. As a result, even if a smaller heat exchanger is used, necessary and sufficient cooling performance can be obtained.

(9) In the manifold 201 according to (7), a channel that allows a refrigerant to flow between a condenser 230 and an expansion valve 235, 240 and a channel that allows the refrigerant to flow between an evaporator 245, 255 and a compressor 225 are preferably provided at an interval shorter than an interval between other channels provided in the channel housing 210.

According to the configuration, heat can be exchanged between the channel that allows the refrigerant to flow between the condenser 230 and the expansion valve 235, 240, and the channel that allows the refrigerant to flow between the evaporator 245, 255 and the compressor 225. For example, the direction in which the refrigerant flowing through the channel between the condenser 230 and the expansion valve 235, 240 flows, and the direction in which the refrigerant flowing through the channel between the evaporator 245, 255 and the compressor 225 flows are configured opposite to each other, by which a difference in temperature between the channel between the condenser 230 and the expansion valve 235, 240 and the channel between the evaporator 245, 255 and the compressor 225 is equalized, and thus heat exchange efficiency can be improved. Therefore, heat exchange can be efficiently performed.

(10) In the manifold 100 according to (7), a refrigerant channel through which refrigerant as the first cooling fluid flowing out from an evaporator 110 flows, and a cooling channel through which a coolant as the second cooling fluid flowing into the evaporator 110 flows are preferably provided at an interval shorter than an interval between other channels provided in the channel housing 105.

According to the configuration, heat can be exchanged between the coolant flowing through the refrigerant channel from the evaporator 110 and the refrigerant flowing through the cooling channel to the evaporator 110. Thus, even if a smaller evaporator 110 is used, sufficient cooling performance can be obtained.

### INDUSTRIAL APPLICABILITY

The technology according to the present disclosure can be utilized for a manifold.

### REFERENCE SIGNS LIST

### [First embodiment]

9: Battery, 41: First internal channel (second channel, cooling channel, cooling pipe), 42: Second internal channel (second channel, cooling channel, cooling pipe), 48: Eighth internal channel (second channel, cooling channel, cooling pipe), 49: Ninth internal channel (second channel, cooling channel, cooling pipe), 71: First internal refrigerant channel (first channel, refrigerant channel, refrigerant pipe), 72: Second internal refrigerant channel (first channel, refrigerant channel, refrigerant pipe), 73: Third internal refrigerant channel (first channel, refrigerant channel, refrigerant pipe), 81: Parallel internal channel (second channel, cooling channel, cooling pipe), 82: Parallel internal refrigerant channel (first channel, refrigerant channel, refrigerant pipe), 83: Closed internal channel (second channel, closed cooling channel, cooling channel, cooling pipe), 84: Closed internal refrigerant channel (first channel, closed refrigerant channel, refrigerant channel refrigerant pipe), 100: Manifold, 105: Channel housing, 110: Chiller (evaporator), and 120: Water-cooled condenser (condenser, heat exchanger)

### [Second embodiment]

111: Refrigerant inlet, 112: Refrigerant outlet, 113: Cooling water inlet, 114: Cooling water outlet, 117: Heat exchange channel (stacked channel), 117a: Heat-exchange refrigerant channel (stacked channel), and 117b: Heat-exchange cooling water channel (stacked channel)

### [Third embodiment]

201: Manifold, 201H: High-temperature channel, 201L: Low-temperature channel, 210: Channel housing, 211: First refrigerant channel, 212: Second refrigerant channel, 213: Third refrigerant channel, 214: Fourth refrigerant channel, 225: Compressor, 230: Water-cooled condenser (condenser), 235: First expansion valve (expansion valve), 240: Second expansion valve (expansion valve), 245: Evaporator, 255: Chiller (evaporator), 260: Comb-tooth shaped portion, 60H: Comb-tooth shaped portion, 2, and 60L: Comb-tooth shaped portion

## Claims

1. A manifold comprising a channel housing including
a first channel that allows a first cooling fluid to flow, and
a second channel that allows a second cooling fluid to flow, wherein,
in the channel housing, heat is exchanged between the first cooling fluid that flows through the first channel and the second cooling fluid that flows through the second channel.

2. The manifold according to claim 1, wherein
the first channel is a refrigerant channel that allows a refrigerant as the first cooling fluid to flow between an evaporator and a condenser, and
the second channel is a cooling channel that allows a coolant as the second cooling fluid to flow at least to a battery.

3. The manifold according to claim 2, wherein, in the channel housing, a water-cooled condenser as the condenser for the refrigerant is mounted at a position on an upstream side with respect to a direction in which the refrigerant flows, and a chiller as the evaporator for the refrigerant is mounted at a position on a downstream side with respect to a direction in which the refrigerant flows.

4. The manifold according to claim 1, wherein
the first channel is a first refrigerant channel that allows a refrigerant as the first cooling fluid to flow between a compressor and a condenser, or a second refrigerant channel that allows the refrigerant to flow between the condenser and an expansion valve, and
the second channel is a third refrigerant channel that allows the refrigerant as the second cooling fluid lower in temperature than the first cooling fluid to flow between the expansion valve and an evaporator, or a fourth refrigerant channel that allows the refrigerant to flow between the evaporator and the compressor.

5. The manifold according to claim 1, wherein
the first channel is a refrigerant channel that allows a refrigerant as the first cooling fluid to flow to a heat exchanger,
the second channel is a cooling channel that allows coolant as the second cooling fluid to flow to the heat exchanger,
the heat exchanger includes a refrigerant inlet through which the refrigerant flows in, a refrigerant outlet through which the refrigerant flows out, a coolant inlet through which the coolant flows in, and a coolant outlet through which the coolant flows out, and
the heat exchanger is fixed to the channel housing by joining the refrigerant channel and the refrigerant inlet, the refrigerant channel and the refrigerant outlet, the cooling channel and the coolant inlet, and the cooling channel and the coolant outlet.

6. The manifold according to claim 5, wherein the heat exchanger includes stacked channels.

7. The manifold according to any one of claims 1 to 6, wherein the first channel and the second channel are provided close to each other.

8. The manifold according to any one of claims 1 to 7, wherein comb-tooth shaped portions protruding from one side of the first channel and of the second channel toward another side of the first channel and of the second channel are formed in each of the first channel and the second channel.

9. The manifold according to claim 7, wherein a channel that allows a refrigerant to flow between a condenser and an expansion valve and a channel that allows the refrigerant to flow between an evaporator and a compressor are provided at an interval shorter than an interval between other channels provided in the channel housing.

10. The manifold according to claim 7, wherein a refrigerant channel through which refrigerant as the first cooling fluid flowing out from an evaporator flows, and a cooling channel through which a coolant as the second cooling fluid flowing into the evaporator flows are provided at an interval shorter than an interval between other channels provided in the channel housing.
